(19) Europäisches Patentamt
European Patent Office
Office européen des brevets

(11) **EP 3 281 031 B1**

(12) **FASCICULE DE BREVET EUROPEEN**

(45) Date de publication et mention
de la délivrance du brevet:
**05.06.2019 Bulletin 2019/23**

(51) Int Cl.:
*G01S 13/02* (2006.01)          *H04B 1/7163* (2011.01)
*G05D 1/06* (2006.01)          *G05D 1/10* (2006.01)
*G01S 5/02* (2010.01)          *H04W 64/00* (2009.01)
*H04W 76/14* (2018.01)          *H04W 84/18* (2009.01)

(21) Numéro de dépôt: **16714890.7**

(22) Date de dépôt: **06.04.2016**

(86) Numéro de dépôt international:
**PCT/EP2016/057516**

(87) Numéro de publication internationale:
**WO 2016/162376 (13.10.2016 Gazette 2016/41)**

(54) **PROCÉDÉ DE COMMUNICATION DANS UN RÉSEAU AD HOC**

KOMMUNIKATIONSVERFAHREN IN EINEM AD-HOC-NETZWERK

COMMUNICATION METHOD IN AN AD HOC NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.04.2015 FR 1553089**

(43) Date de publication de la demande:
**14.02.2018 Bulletin 2018/07**

(73) Titulaire: **Safran Electronics & Defense SAS
92100 Boulogne-Billancourt (FR)**

(72) Inventeur: **CHIODINI, Alain
92100 Boulogne Billancourt (FR)**

(74) Mandataire: **Cabinet Le Guen Maillet
3, impasse de la Vigie
CS 71840
35418 Saint-Malo Cedex (FR)**

(56) Documents cités:
**WO-A1-01/22672          WO-A1-2014/088848
US-A1- 2004 192 353**

**Description**

La présente invention concerne un procédé de communication dans un réseau ad hoc et un dispositif de communication mettant en oeuvre le procédé.

L'invention se situe dans le domaine des communications sur réseaux sans fils. L'invention est notamment adaptée pour des réseaux de type réseau ad-hoc sans infrastructure comportant des dispositifs de communication mobiles comme les réseaux de type MANET (réseau Ad-Hoc mobile: « Mobile Ad-hoc NETwork » en terminologie anglo-saxonne).

Dans un réseau ad-hoc mobile, chaque dispositif de communication du réseau est un dispositif de communication sans fil relié à d'autres dispositifs de communication du réseau par un ensemble de liens de communication, cet ensemble pouvant varier dans le temps. Les liens de communication entre deux dispositifs de communication peuvent être des liens de communication directs, i.e. les communications entre les deux dispositifs de communication sont sans intermédiaires, ou sont indirects, i.e. au moins un dispositif de communication du réseau sert d'intermédiaire entre les deux dispositifs de communication devant communiquer, par exemple, lorsque les deux dispositifs de communication devant communiquer sont trop éloignés ou séparés par un obstacle. Les liens de communication sont établis automatiquement grâce à un protocole de communication pour réseaux mobiles, par exemple de type LSR (routage par état de liens : « Link State Routing » en terminologie anglo-saxonne).

Les communications sans fil entre les dispositifs de communication du réseau peuvent, par exemple, être basées sur des normes de téléphonie numérique telles que par exemple la norme DECT (Téléphone sans fil amélioré, « Digital Enhanced Cordless Téléphoné » en terminologie anglo-saxonne) ou la norme PHS (système de téléphone personnel, « personal Handyphone System » en terminologie anglo-saxonne) ou sur des normes de communication numériques telles que par exemple la norme Wi-Fi (ISO/CEI 8802-11). Les dispositifs de communication peuvent alors échanger des données d'images, des vidéos, des données audio, des données de signalisation, etc.

Parmi les dispositifs de communication du réseau, l'un peut être un dispositif de communication coordinateur, dit dispositif coordinateur, alors que les autres dispositifs de communication sont des dispositifs de communication subordonnés, dits dispositifs subordonnés. Dans certaines applications de réseaux ad hoc mobiles, le dispositif coordinateur est utilisé par une personne, dite personne coordinatrice, devant diriger des interventions mises en oeuvre par un ensemble de personnes, dites personnes subordonnées, chaque personne subordonnée communiquant avec la personne coordinatrice en utilisant un dispositif subordonné. Par ailleurs, le dispositif coordinateur peut centraliser certaines opérations à mettre en oeuvre durant une intervention telle que, par exemple, une synchronisation des horloges des dispositifs de communication du réseau ad hoc.

Dans certaines applications des réseaux ad hoc mobiles, il est intéressant de pouvoir déterminer des positions relatives des dispositifs de communication les uns par rapport aux autres. Par exemple, afin de pouvoir coordonner une intervention, il peut être important pour une personne coordinatrice de savoir où se trouvent exactement les personnes subordonnées qu'elle dirige. La détermination des positions relatives utilisent généralement des moyens de positionnement tels qu'un module de positionnement, le module de positionnement pouvant par exemple être intégré directement dans le dispositif de communication. Le module de positionnement peut, par exemple, être un module de positionnement par satellite utilisant le système de positionnement GPS (système de positionnement mondial, « Global Positioning System » en terminologie anglo-saxonne), le système de positionnement GLONASS (système global de positionnement satellitaire, « GLObalnaïa NAvigatsionnaïa Spoutnikovaïa Sistéma » en terminologie Russe), ou le système de positionnement Galileo.

Les systèmes de positionnement par satellite sont très efficaces en extérieur, mais beaucoup moins efficaces dans un environnement confiné tel qu'un bâtiment, ou un ouvrage tel qu'un tunnel, un sous-terrain, etc. Il est connu des dispositifs de communication utilisant des moyens de positionnement mieux adaptés aux environnements confinés. Des moyens de positionnement adaptés aux environnements confinés sont par exemple un module de positionnement utilisant une modulation ULB (Ultra Large Bande, « Ultra Wide Band (UWB) » en terminologie anglo-saxonne). La modulation ULB est basée sur une transmission d'impulsions de très courte durée, souvent inférieures à la nanoseconde. La modulation ULB utilise généralement des méthodes de modulation de type modulation en position d'impulsion (« Pulse Position Modulation (PPM) » en terminologie anglo-saxonne), en tout ou rien (« On Off Keying (OOK) » en terminologie anglo-saxonne) ou bi-phase. La modulation ULB peut être utilisée pour communiquer des données, en général sur de faibles distances. La modulation ULB peut aussi être utilisée pour du positionnement. C'est ainsi qu'il est possible d'équiper des dispositifs de communication, devant se positionner relativement les uns par rapport aux autres dans un environnement confiné, d'un module de positionnement basé sur une utilisation d'une modulation ULB. Equipé d'un tel module de positionnement, un premier dispositif de communication peut obtenir une information représentative d'une position relative dudit premier dispositif de communication par rapport à un second dispositif de communication, telle qu'une distance, en envoyant des données au second dispositif de communication sous forme d'impulsions modulées suivant une modulation ULB, dites impulsions ULB. Le second dispositif de communication évalue alors la distance le séparant du premier dispositif de communication en mesurant le temps de propagation des impulsions ULB et retransmet cette information au premier dispositif de communication. Il est de plus possible de déterminer des positions relatives de chaque dispositif de communication d'un réseau ad hoc comportant au moins trois dispositifs de communication en mettant en oeuvre une méthode de triangulation.

Une caractéristique des réseaux ad hoc mobiles est que chaque dispositif de communication peut avoir un mouvement indépendant. Les mouvements des dispositifs de communication entraînent des variations des conditions de communication. Ainsi, d'un instant à l'autre, un dispositif de communication peut voir ses capacités de communication diminuer jusqu'à ne plus pouvoir communiquer avec les autres dispositifs de communication du réseau. La diminution des capacités de communication d'un dispositif de communication peut être provoquée par des phénomènes d'interférence. Il est connu que les normes de communication sans fil DECT, PHS ou Wi-Fi sont particulièrement sensibles aux phénomènes d'interférence dus à des réflexions des ondes radio sur des obstacles tels que des murs, ce qui est particulièrement fréquent dans un endroit confiné. Or, certaines applications des réseaux ad hoc mobiles nécessitent une communication constante entre les personnes subordonnées et la personne coordinatrice.

Il est souhaitable de pallier ces différents inconvénients de l'état de la technique.

Il est notamment souhaitable de fournir un réseau ad hoc mobile dans lequel les communications entre les dispositifs de communication sont préservées autant que possible. Il est notamment souhaitable de pallier des déficiences des moyens de communication sans fil tout en fournissant une solution qui soit simple à mettre en oeuvre et à faible coût.

Selon un premier aspect, la présente invention concerne un procédé de communication dans un réseau ad hoc, le réseau ad hoc comprenant un dispositif de communication mobile coordinateur, dit dispositif coordinateur, et une pluralité de dispositifs de communication mobiles subordonnés, dits dispositifs subordonnées, chaque dispositif de communication comprenant un module de communication sans fil et un module de positionnement utilisant une transmission de premières impulsions modulées suivant une première modulation ultra large bande pour déterminer des informations représentatives d'une position dudit dispositif de communication. Le procédé comprend les étapes suivantes, lorsqu'il est mis en oeuvre par un dispositif de communication : obtenir des données à transmettre ; vérifier une capacité de transmission du module de communication sans fil ; lorsque le module de communication sans fil ne permet pas de transmettre les données, utiliser le module de positionnement pour transmettre lesdites données sous forme de secondes impulsions orthogonales aux premières impulsions.

De cette manière, l'invention permet de tirer profit du module de positionnement utilisant une transmission d'impulsions modulées suivant une modulation ultra large bande pour pallier des déficiences du module de communication sans fil.

Selon un mode de réalisation, le module de positionnement utilise une première antenne ayant une première polarité pour transmettre les premières impulsions et une seconde antenne ayant une polarité orthogonale à la première polarité pour transmettre les secondes impulsions.

Une utilisation d'antennes de polarité orthogonale permet d'obtenir des premières et secondes impulsions ultra large bande orthogonales et ainsi d'éviter que l'utilisation du module de positionnement pour mettre en oeuvre une fonction de communication n'affecte les capacités de positionnement du module de positionnement.

Selon un mode de réalisation, l'étape d'utilisation du module de positionnement pour transmettre lesdites données sous forme de secondes impulsions orthogonales aux premières impulsions comprend une étape d'obtention d'une seconde modulation ultra large bande permettant d'obtenir des secondes impulsions orthogonales aux premières impulsions, lesdites données étant transmises en utilisant la seconde modulation.

Une utilisation d'une modulation permettant d'obtenir, pour la mise en oeuvre d'une fonction de communication par le module de positionnement, des impulsions ultra large bande orthogonales aux impulsions ultra large bande utilisées pour mettre en oeuvre la fonction de positionnement du module de positionnement, permet d'éviter que l'utilisation du module de positionnement pour mettre en oeuvre la fonction de communication n'affecte les capacités de positionnement du module de positionnement.

Selon un mode de réalisation, les première et seconde modulations sont des modulations en position d'impulsion permettant d'obtenir des impulsions, dites impulsions composites, comprenant au moins une impulsion unitaire, chaque impulsion unitaire étant représentée par la formule suivante :

$$I_n(t) = P_n(t)G(t)$$

où $n$ est un indice prenant une valeur entière différente pour la première ou la seconde modulation,

$P_n(t)$ est un polynôme de degré $n$ tel que $P_n(t) = \sum_{k=0}^{k=n} a_{k,n} t^k$, où $a_{k,n}$ est un coefficient du polynôme de degré $n$, $k$ un nombre entier, et $t$ est une variable représentative du temps,

$G(t)$ est une fonction gaussienne telle que $G(t) = \frac{1}{\sqrt{2\pi}\sigma} e^{-\frac{t^2}{2\sigma^2}}$ ;

les impulsions unitaires comprises dans une impulsion composite étant orthogonales deux à deux et au moins une impulsion unitaire d'une impulsion composite obtenue par la première modulation étant orthogonale à chaque impulsion unitaire d'une impulsion composite obtenue par la seconde modulation.

L'invention fournit une méthode générique pour obtenir des impulsions ultra large bande orthogonales.

Selon un mode de réalisation, les coefficients $a_{k,n}$ des polynômes sont obtenus itérativement en déterminant en premier le coefficient du polynôme du plus petit degré, puis en déterminant successivement les coefficients des polynômes de degré supérieur.

Selon un deuxième aspect de l'invention, l'invention concerne un dispositif de communication mobile compris dans un réseau ad hoc, ledit dispositif de communication mobile comprenant un module de communication sans fil pour communiquer des données avec d'autres dispositifs de communication mobile du réseau ad hoc et un module de positionnement utilisant une transmission de premières impulsions modulées suivant une première modulation ultra large bande pour déterminer des informations représentatives d'une position dudit dispositif de communication. Ledit dispositif comprend : des moyens pour obtenir des données à transmettre ; des moyens de vérification pour vérifier une capacité de transmission du module de communication sans fil ; des moyens de transmission pour transmettre lesdites données sous forme de secondes impulsions orthogonales aux premières impulsions utilisant le module de positionnement.

Selon un troisième aspect de l'invention, l'invention concerne un système de communication comprenant une pluralité de dispositifs de communication mobile selon le deuxième aspect.

Selon un quatrième aspect de l'invention, l'invention concerne un programme d'ordinateur comprenant des instructions pour mettre en oeuvre, par un dispositif, le procédé selon le premier aspect, lorsque ledit programme est exécuté par un processeur dudit dispositif.

Selon un cinquième aspect, l'invention concerne des moyens de stockage stockant un programme d'ordinateur comprenant des instructions pour mettre en oeuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un réseau ad hoc comprenant une pluralité de dispositifs de communication ;
- la Fig. 2 illustre schématiquement un dispositif de communication selon l'invention ;
- la Fig. 3 illustre schématiquement un exemple d'architecture matérielle d'un module de traitement d'un dispositif de communication selon l'invention;
- la Fig. 4 illustre schématiquement un procédé de détermination de positions relatives de dispositif de communication dans un réseau ad hoc;
- la Fig. 5 illustre schématiquement un procédé de communication selon l'invention mis en oeuvre par un dispositif de communication du réseau ad hoc;
- la Fig. 6 illustre schématiquement un exemple de mise en oeuvre de l'invention dans lequel le module de positionnement met en oeuvre une fonction de communication en utilisant une modulation ULB permettant d'obtenir des impulsions ULB orthogonales aux impulsions ULB utilisées pour mettre en oeuvre une fonction de positionnement; et,
- les Figs. 7A, 7B et 7C représentent des exemples d'impulsions ULB orthogonales deux à deux utilisées dans la présente invention.

L'invention est décrite par la suite dans le cas d'un réseau ad hoc mobile dans lequel un dispositif de communication est un dispositif coordinateur, les autres dispositifs de communication étant des dispositifs subordonnés. L'invention est applicable dans un contexte où le rôle de dispositif coordinateur n'est pas définitivement alloué à un des dispositifs de communication du réseau ad hoc, mais au contraire, chaque dispositif de communication peut, à un moment donné, devenir le dispositif coordinateur, le dispositif coordinateur précédent redevenant un dispositif subordonné.

Par ailleurs, la présente invention s'applique à tous dérivés des réseaux LSR, c'est-à-dire, par exemple, des réseaux utilisant le standard OSPF (ouverture du chemin de transmission le plus court en premier : « Open Shortest Path First » en terminologie anglo-saxonne), et des versions optimisées du standard OSPF, comme OLSR (Routage par état de liens optimisé : « Optimised Link State Routing » en terminologie anglo-saxonne) ou MARP (Protocole de routage prenant en compte la mobilité : « Mobility Aware Routing Protocol » en terminologie anglo-saxonne).

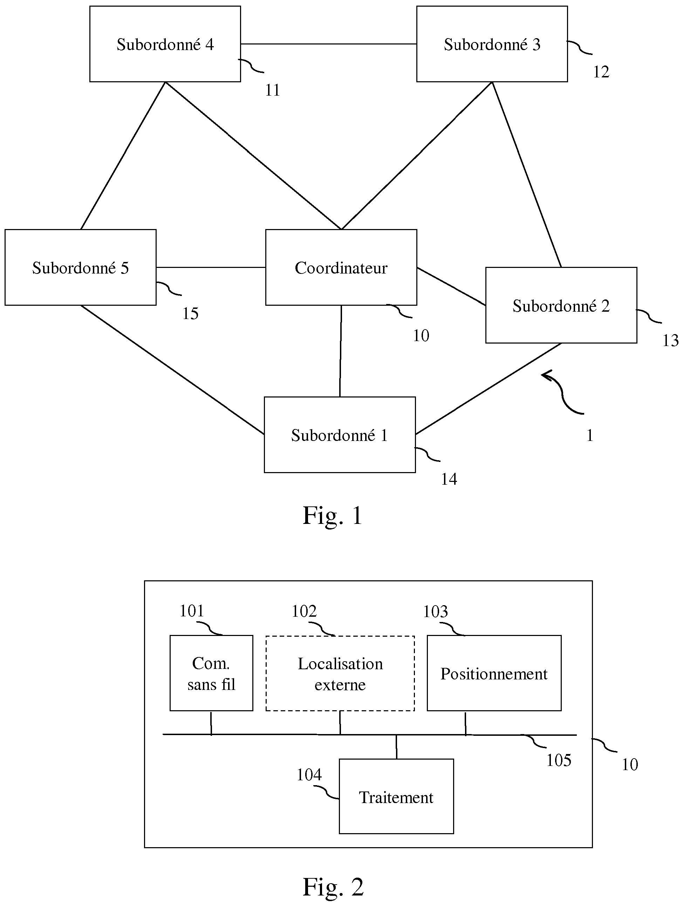

La **Fig. 1** illustre schématiquement un réseau ad hoc 1 comprenant une pluralité de dispositifs de communication 10, 11, 12, 13, 14 et 15. Chaque dispositif de communication 10, 11, 12, 13, 14 et 15 est mobile car transporté, par exemple, par une personne. Le dispositif de communication 10 est un dispositif coordinateur transporté par exemple par une personne coordinatrice dans une intervention. Les dispositifs de communication 11 à 15 sont des dispositifs subordonnés transportés par exemple par des personnes subordonnées dirigées dans l'intervention par la personne coordinatrice.

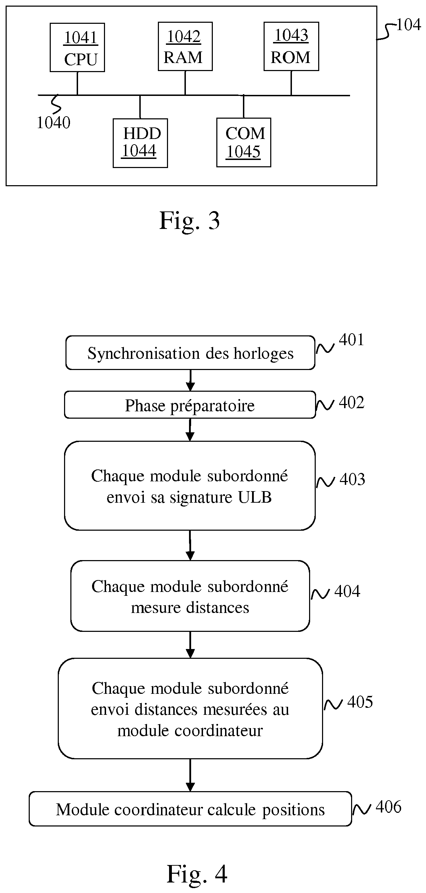

La **Fig. 2** illustre schématiquement un dispositif de communication selon l'invention. Nous prenons ici l'exemple du module de communication 10. Toutefois, les modules 10 à 15 sont tous identiques. Le dispositif de communication 10 comprend, reliés par un bus de communication 105, un module de communication sans fil 101, un module de positionnement 103 et un module de traitement 104. Le module de communication sans fil 101 est par exemple un module DECT permettant au dispositif de communication 10 de communiquer avec les autres dispositifs de communication 11 à 15. Le module de positionnement 103 utilise une modulation ULB pour obtenir des informations représentatives d'une position relative du dispositif de communication 10 par rapport aux dispositifs de communication 11 à 15, selon un procédé que nous décrivons en relation avec la Fig. 4. Le module de traitement est décrit par la suite en relation avec la Fig. 3.

Dans un mode de réalisation, le dispositif de communication 10 comprend un module de localisation externe 102 tel que module GPS, GLONASS ou Galileo.

Dans un mode de réalisation, le module de communication sans fil 101 pourrait tout aussi bien être un module PHS ou Wi-Fi.

La **Fig. 3** illustre schématiquement une architecture matérielle du module de traitement 104.

Selon l'exemple d'architecture matérielle représenté à la Fig. 3, le module de traitement 104 comprend alors, reliés par un bus de communication 1040 : un processeur ou CPU (« Central Processing Unit » en anglais) 1041 ; une mémoire vive RAM (« Random Access Memory » en anglais) 1042; une mémoire morte ROM (« Read Only Memory » en anglais) 1043 ; une unité de stockage telle qu'un disque dur ou un lecteur de support de stockage, tel qu'un lecteur de cartes SD (« Secure Digital » en anglais) 1044 ; au moins une interface de communication 1045 permettant au module de traitement 104 de communiquer avec le module de communication sans fil 101, le module de positionnement 103 et le module de localisation externe 102 s'il est présent.

Le processeur 1041 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsque le module de traitement 104 est mis sous tension, le processeur 1041 est capable de lire de la RAM 1042 des instructions et de les exécuter. Ces instructions forment un programme d'ordinateur causant la mise en oeuvre, par le processeur 1041, de tout ou partie des algorithmes et étapes décrits ci-après en relation avec les Figs. 4, 5 et 6. Le fonctionnement du processeur 1041 est cadencé par une horloge interne non représentée.

Tout ou partie des algorithmes et étapes décrits ci-après en relation avec les Figs. 4, 5 et 6 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 4** illustre schématiquement un procédé de détermination de positions relatives de dispositifs de communication dans un réseau ad hoc. Ce procédé est mis en oeuvre dans le réseau ad hoc 1 pour déterminer les positions relatives des dispositifs de communication 10 à 15.

Le procédé débute par une étape 401 de synchronisation des horloges internes du module de traitement 104 de chaque dispositif de traitement 10 à 15. Chaque module de traitement 104 synchronise son horloge interne en utilisant des informations obtenues lors des communications sans fil utilisant le module de communication sans fil 101, ici un module DECT. Pour communiquer, le module DECT utilise un mode de multiplexage dit Accès Multiple à Répartition dans le Temps (AMRT) sur une période de communication partagée appelée trame. Les trames sont répétées cycliquement et ont une durée fixe connue de chaque module de communication 10 à 15. Chaque dispositif de communication 10 à 15 dispose d'une référence temporelle commune $T_0$ correspondant au début d'une trame. La référence temporelle $T_0$ est maintenue synchrone entre les dispositifs de communications 10 à 15 par une émission par le dispositif coordinateur 10 d'un signal de synchronisation DECT. Chaque unité de communication 11 à 15 synchronise son horloge interne sur ce signal de synchronisation DECT.

Dans un mode de réalisation de l'étape 401 de synchronisation, le dispositif coordinateur 10 synchronise son horloge interne sur une horloge interne du module de localisation externe 102 lorsque celui-ci est mis en oeuvre par un module GPS, GLONASS ou Galileo. De cette manière, l'ensemble du réseau ad hoc est synchronisé sur une horloge absolue donnée par le module de localisation externe 102.

L'étape de synchronisation 401 est suivie d'une étape 402 dite phase préparatoire durant laquelle le dispositif coordinateur 10 transmet à chaque dispositif subordonné 11 à 15 des informations permettant à chaque dispositif subordonné 11 à 15 de s'identifier de manière unique lors de la mise en oeuvre du procédé de détermination de positions relatives. Pour ce faire le dispositif coordinateur 10 transmet une table d'identification spécifique à chaque dispositif subordonné. La table d'identification transmise à un dispositif subordonné comprend les éléments suivants : un identifiant spécifique pour ledit dispositif subordonné, une signature ULB spécifique pour ledit dispositif subordonné et une durée de retard à l'émission spécifique pour le dispositif subordonné.

L'identifiant prend la forme d'un nombre entier.

La signature ULB est constituée d'un train d'impulsions ULB non périodiques. Le train d'impulsions se caractérise par une durée, un nombre d'impulsions ULB sur ladite durée et une répartition temporelle des impulsions ULB sur ladite durée qui sont spécifiques à un dispositif de communication et permettent ainsi de le reconnaitre.

La durée de retard à l'émission correspond à une durée séparant la référence temporelle commune $T_0$ correspondant au début d'une trame et le début de l'émission de la signature ULB. La durée de retard à l'émission permet d'éviter que deux dispositifs de communication émettent des données en même temps pendant une trame.

Lors de la phase préparatoire, chaque dispositif subordonné 11 à 15 reçoit de la part du dispositif coordinateur 10 la table d'identification des autres dispositifs subordonnés du réseau ad hoc.

A la fin de la phase préparatoire, chaque dispositif de communication 10 à 15 possède les informations lui permettant de s'identifier dans le réseau ad hoc 1 et d'identifier les autres dispositifs de communication du réseau ad hoc 1.

A la suite de la phase préparatoire représentée par l'étape 402, le procédé de détermination des positions relatives rentre dans une phase opératoire représentée par les étapes 403 à 406.

Lors de l'étape 403, chaque module subordonné émet sa signature. Cette émission se fait dans une trame, chaque module subordonné respectant l'ordre d'émission des signatures données par les durées de retard à l'émission.

Lors de l'étape 404, lorsqu'un dispositif de communication, dit dispositif récepteur, reçoit une signature, il identifie le dispositif de communication à l'origine de l'émission de cette signature, dit dispositif émetteur, et mesure la distance séparant le dispositif émetteur du dispositif récepteur. Lors de l'étape 404, chaque dispositif de communication 10 à 15 du réseau ad hoc 1 stocke les distances qu'il a pu mesurer.

Dans l'étape 405, chaque module subordonné 11 à 15 transmet chaque distance qu'il a pu mesurer au module coordinateur 10 en utilisant le module de communication sans fil 101.

Lors de l'étape 406, le dispositif coordinateur détermine les positions relatives des dispositifs subordonnés à partir des distances qu'il a reçues selon un procédé analogue à une triangulation. Dans l'exemple du réseau ad hoc 1, cette détermination, mise en oeuvre par le module de traitement 104, peut par exemple se faire de la manière suivante.

Le module de traitement 104 définit un repère orthogonal *(O, x, y)* centré sur la position du dispositif coordinateur 10. Soit $(x_{10}, y_{10})$, $(x_{11}, y_{11})$, $(x_{12}, y_{12})$, $(x_{13}, y_{13})$, $(x_{14}, y_{14})$ et $(x_{15}, y_{15})$ les coordonnées respectives des dispositifs de communication 10, 11, 12, 13, 14 et 15 dans le repère orthogonal *(O, x, y)* et $D_{i\text{-}j}$ *(i* $\in$ *[10; 14], j[11; 15], i # j)* les distances séparant le dispositif coordinateur 10 et respectivement les dispositifs subordonnés 11, 12, 13, 14 et 15.

On peut alors écrire le système d'équations suivant :

$$D_{10-11} = \sqrt{(x_{11} - x_{10})^2 + (y_{11} - y_{10})^2}$$

$$D_{10-12} = \sqrt{(x_{12} - x_{10})^2 + (y_{12} - y_{10})^2}$$

$$D_{10-13} = \sqrt{(x_{13} - x_{10})^2 + (y_{13} - y_{10})^2}$$

$$D_{10-14} = \sqrt{(x_{14} - x_{10})^2 + (y_{14} - y_{10})^2}$$

$$D_{10-15} = \sqrt{(x_{15} - x_{10})^2 + (y_{15} - y_{10})^2}$$

$$D_{11-12} = \sqrt{(x_{12} - x_{11})^2 + (y_{12} - y_{11})^2}$$

$$D_{11-13} = \sqrt{(x_{13} - x_{11})^2 + (y_{13} - y_{11})^2}$$

$$D_{11-14} = \sqrt{(x_{14} - x_{11})^2 + (y_{14} - y_{11})^2}$$

$$D_{11-15} = \sqrt{(x_{15} - x_{11})^2 + (y_{15} - y_{11})^2}$$

$$D_{12-13} = \sqrt{(x_{13} - x_{12})^2 + (y_{13} - y_{12})^2}$$

$$D_{12-14} = \sqrt{(x_{14} - x_{12})^2 + (y_{14} - y_{12})^2}$$

$$D_{12-15} = \sqrt{(x_{15} - x_{12})^2 + (y_{15} - y_{12})^2}$$

$$D_{13-14} = \sqrt{(x_{14} - x_{13})^2 + (y_{14} - y_{13})^2}$$

$$D_{13-15} = \sqrt{(x_{15} - x_{13})^2 + (y_{15} - y_{13})^2}$$

$$D_{14-15} = \sqrt{(x_{15} - x_{14})^2 + (y_{15} - y_{14})^2}$$

Toutes les distances $D_{i-j}$ étant connues, nous obtenons donc, dans cet exemple, un système de quinze équations à dix inconnues, $(x_{10}, y_{10})$ étant l'origine du repère orthogonal. La résolution de ce système par le module de traitement 104 utilise des méthodes de résolution connues de l'homme du métier, telles que des méthodes par substitution. De cette manière, la position relative de chaque dispositif subordonné 11 à 15 par rapport au dispositif coordinateur 10 est obtenue.

Dans un mode de réalisation, le module coordinateur 10 utilise son module de localisation externe 102 pour déterminer sa position absolue et calcule les positions absolues de chaque dispositif subordonné 11 à 15 à partir de la position absolue déterminée et des positions relatives qu'il a calculées.

Dans un mode de réalisation, le dispositif coordinateur retransmet les positions relatives ou absolues qu'il a déterminées à chaque dispositif subordonné 11 à 15. De cette manière, chaque dispositif subordonné 11 à 15 connaît la position relative ou absolue de chaque dispositif de communication 10 à 15 du réseau ad hoc 1.

Dans un mode de réalisation, chaque dispositif subordonné émet successivement plusieurs signatures de manière à permettre à chaque dispositif de communication recevant cette signature d'affiner sa mesure de distance, par exemple, en moyennant plusieurs distances mesurées.

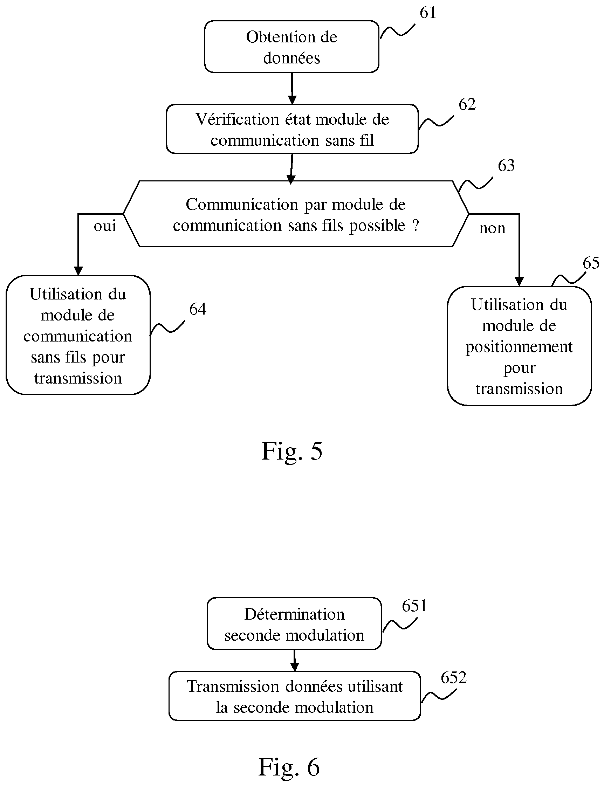

La **Fig. 5** illustre schématiquement un procédé de communication selon l'invention mis en oeuvre par un dispositif de communication 10, 11, 12, 13, 14 ou 15 du réseau ad hoc 1. Nous prenons ici l'exemple du dispositif subordonné 11. Toutefois les dispositifs 10, 12, 13, 14 et 15 mettent en oeuvre le même procédé.

Dans une étape 61, le module de traitement 104 obtient des données à transmettre ainsi qu'une information représentative d'un ou plusieurs dispositifs de communication destinataires de ces données. Les données à transmettre peuvent par exemple être des données audio, des images, des vidéos, etc.

Dans une étape 62, le module de traitement 104 transmet une requête au module de communication sans fil 101 pour déterminer les capacités de communication du module de communication sans fil avec le ou les dispositifs de communication destinataires des données. Lorsqu'il reçoit ladite requête, le module de communication sans fil 101 détermine ses capacités de communication avec chaque dispositif de communication destinataire. Pour ce faire, par exemple, le module de transmission sans fil 101 transmet un message de test à chaque dispositif de communication. Chaque dispositif de communication destinataire recevant le message de test répond en renvoyant un accusé de réception au module de communication sans fil 101 comprenant une information représentative d'une qualité de réception du message. L'information représentative d'une qualité de réception du message peut, par exemple, être une mesure de RSSI (Indication de la force du signal, « Received Signal Strength Indication » en terminologie anglo-saxonne). Le module de communication sans fil 101 communique ensuite les informations représentatives des qualités de réception qu'il a obtenues au module de traitement 104.

Lors d'une étape 63, le module de traitement 104 détermine, à partir des informations représentatives des qualités de réception, si une communication utilisant le module de communication sans fil 101 est possible. Ainsi, pour chaque dispositif de communication destinataire, le module de traitement 104 détermine lorsqu'un dispositif de communication destinataire a transmis une information représentative d'une qualité de communication inférieure à un seuil prédéfini, ou que ledit dispositif de communication destinataire n'a pas transmis d'accusé de réception, qu'une communication utilisant le module de communication sans fil 101 n'est pas possible. Le module de traitement 104 décide alors d'utiliser le module de positionnement 103 pour communiquer avec ledit dispositif de communication destinataire. La communication avec ledit dispositif de communication destinataire est alors mise en oeuvre lors d'une étape 65. Nous détaillons par la suite deux exemples de mise en oeuvre de l'étape 65, l'un de ces exemples étant détaillé en relation avec la Fig. 6.

Si par contre, lors de l'étape 63, un dispositif de communication destinataire a transmis une information représentative d'une qualité de communication supérieure ou égale au seuil prédéfini, le dispositif de traitement 104 décide d'utiliser le module de communication sans fil 101 pour communiquer avec ledit dispositif de communication destinataire. La communication utilisant le module de communication sans fil 101 est mise en oeuvre lors d'une étape 64.

Dans un mode de réalisation, préalablement à la mise en oeuvre d'une communication utilisant le module de positionnement 103 entre le dispositif subordonné 11 et un des dispositifs de communication 10 et 12 à 15 avec lequel une communication utilisant le module de communication sans fil 101 est impossible, dit dispositif non joignable, le dispositif de traitement 104 du dispositif subordonné 11 détermine si la communication utilisant le module de positionnement est possible. Pour ce faire, le module de traitement 104 détermine si, dans le cadre de la mise oeuvre du procédé de détermination des positions relatives des dispositifs de communication décrit en relation avec la Fig. 4, une distance a pu être déterminée entre le dispositif subordonné 11 et le dispositif non joignable. Pour ce faire, par exemple, lors de l'étape 404, lorsqu'un dispositif de communication a reçu une signature et qu'il a pu déterminer la distance le séparant du dispositif de communication ayant émis la signature, le dispositif de communication ayant reçu la signature transmet la signature au dispositif ayant émis la signature. De cette manière, chaque dispositif de communication ayant émis une signature sait avec quel dispositif de communication il peut communiquer par le module de positionnement 103.

Une fonction principale de module de positionnement 103 d'un dispositif de communication 10, 11, 12, 13, 14 ou 15 est de fournir des moyens de positionnement audit dispositif de communication. Lorsque le module de positionnement 103 est utilisé pour remplir une fonction de communication, la mise en oeuvre de cette fonction ne doit pas interférer avec la fonction de positionnement. Afin que les deux fonctions puissent cohabiter, la mise en oeuvre de deux fonctions dans le module de positionnement utilise des modulations ULB différentes permettant de générer des impulsions ULB orthogonales.

Il est possible d'obtenir des impulsions ULB orthogonales de différentes manières.

Dans un mode de réalisation, chaque fonction du module de positionnement utilise une antenne ULB dédiée, l'antenne ULB utilisée dans la fonction de positionnement ayant une polarisation orthogonale à l'antenne ULB utilisée pour la fonction de communication. Chaque antenne est, par exemple, mise en oeuvre par une antenne planaire (« patch » en terminologie anglo-saxonne) dont l'élément rayonnant est une surface conductrice généralement carrée ou rectangulaire, séparée d'un plan réflecteur conducteur par une lame diélectrique. Les deux antennes sont suffisamment espacées l'une de l'autre afin de réduire leur couplage mutuel. La fonction de positionnement peut par exemple utiliser une antenne ayant une polarisation horizontale, et la fonction de communication peut utiliser une antenne ayant une polarisation verticale.

Dans un mode de réalisation, chaque fonction du module de positionnement utilise une modulation ULB dédiée. La modulation ULB utilisée dans la fonction de positionnement permet d'obtenir des impulsions composites ULB orthogonales à des impulsions composites ULB obtenues par la modulation ULB utilisée dans la fonction de communication. Nous appelons impulsion composite ULB, une impulsion ULB comprenant au moins une impulsion unitaire ULB. Une impulsion composite comprenant plusieurs impulsions unitaires ULB résulte d'une concaténation desdites impulsions unitaires ULB.

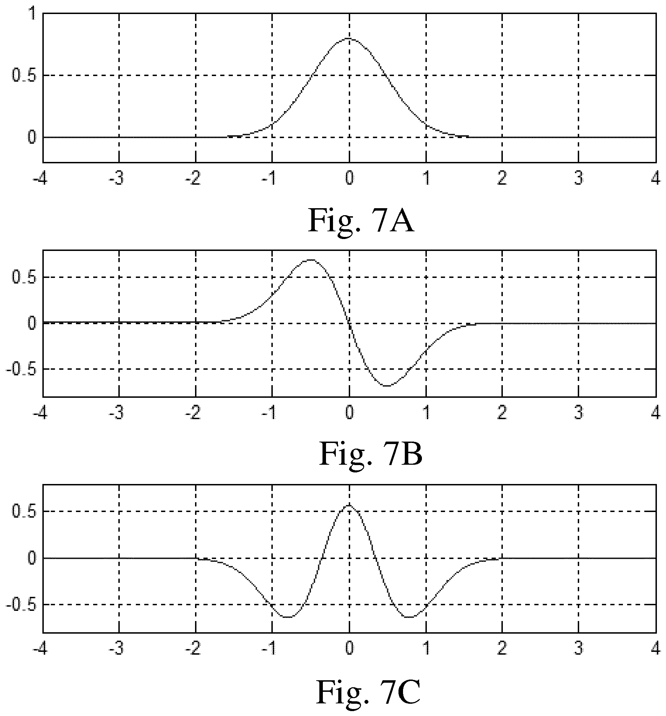

Les **Figs. 7A, 7B** et **7C** représentent des exemples d'impulsions unitaires ULB orthogonales deux à deux utilisées dans la présente invention.

Les axes horizontaux représentent le temps exprimé en nano secondes et les axes verticaux représentent des amplitudes exprimées en volt ou dans une unité de tension prédéterminée.

La **Fig. 7a** représente une impulsion unitaire ULB $\alpha(t)$ qui a pour équation :

$$\alpha(t) = \frac{K}{\sqrt{2\pi}\sigma} e^{-\frac{t^2}{2\sigma^2}}$$

où $K$ est un coefficient de normalisation, $\sigma$ est un écart type d'une Gaussienne compris entre $10^{-10}$ et $10^{-9}$s. Par exemple, $K$ est égal à $10^{-9}$ et $\sigma = 0{,}5$ ns.

La **Fig. 7b** représente une impulsion unitaire ULB $\beta(t)$ qui a pour équation :

$$\beta(t) = \frac{K}{\sqrt{\pi}\sigma} \left(-\frac{t}{\sigma}\right) e^{-\frac{t^2}{2\sigma^2}}$$

La **Fig. 7c** représente une impulsion unitaire ULB $\gamma(t)$ qui a pour équation :

$$\gamma(t) = \frac{K}{2\sqrt{\pi}\sigma}\left(1 - 2\left(\frac{t}{\sigma}\right)^2\right)e^{-\frac{t^2}{2\sigma^2}}$$

Les impulsions unitaires ULB $\alpha(t)$, $\beta(t)$ et $\gamma(t)$ sont orthogonales deux à deux.

De manière générale, une impulsion unitaire ULB d'indice $n$ peut être représentée par la formule suivante:

$$I_n(t) = P_n(t)G(t)$$

où $P_n(t)$ est un polynôme de degré $n$ $\left(P_n(t) = \sum_{k=0}^{k=n} a_{k,n}t^k\right)$ où $a_{k,n}$ est un coefficient du polynôme de degré $n$, $k$ un nombre entier, $n$ est l'indice de l'impulsion ultra large bande et $t$ est le temps, $G(t)$ est une fonction gaussienne

$\left(G(t) = \frac{1}{\sqrt{2\pi}\sigma}e^{-\frac{t^2}{2\sigma^2}}\right)$

L'orthogonalité de deux impulsions unitaires ULB peut s'exprimer sous forme d'un produit scalaire nul.

Un produit scalaire $S_{m,n}$ entre deux impulsions unitaires ULB peut s'écrire de la manière suivante :

$$S_{m,n} = \int_{-\infty}^{+\infty} I_m(t)\,I_n(t)dt = \delta_{m,n}$$

où $\delta_{m,n}$ désigne le symbole de Kronecker :

$$\begin{cases} \delta_{m,n} = 0 \ si \ m \neq n \\ \delta_{m,n} = 1 \ si \ m = n \end{cases}$$

Soit la formule suivante : $U_n = \int_0^{+\infty} t^n e^{-at^b}dt = \frac{1}{b}a^{-\frac{n+1}{b}}\Gamma\left(\frac{n+1}{b}\right)$ où $\Gamma$ désigne la fonction gamma :

$$\Gamma : x \ \mapsto \int_0^{+\infty} t^{x-1}e^{-t}dt$$

Appelons $V_n$ l'intégrale suivante :

$$V_n = \int_{-\infty}^{+\infty} t^n e^{-at^b}dt$$

où $a$ et $b$ sont des constantes, par exemple $a = \frac{1}{\sigma^2}$ et $b = 2$

Si $n$ est pair alors nous avons :

$$V_n = \int_{-\infty}^{+\infty} t^n e^{-\frac{t^2}{\sigma^2}}dt = 2U_n = 2\int_0^{+\infty} t^n e^{-\frac{t^2}{\sigma^2}}dt = \sigma^{n+1}\Gamma\left(\frac{n+1}{2}\right)$$

Sinon :

$$V_n = 0$$

A partir de ce résultat, le produit scalaire $S_{m,n}$ peut être calculé itérativement en partant de $m = 0$.
Pour m = 0 :

$$\mathcal{S}_{0,0} = \int_{-\infty}^{+\infty} I_0(t)\, I_0(t)dt = \int_{-\infty}^{+\infty} I_0^2(t)dt = 1$$

$$\int_{-\infty}^{+\infty} P_0^2(t)G^2(t)dt = \int_{-\infty}^{+\infty} a_{0,0}^2 \frac{1}{2\pi\sigma^2} e^{-\frac{t^2}{\sigma^2}}dt = 1$$

$$a_{0,0}^2 \int_{-\infty}^{+\infty} e^{-\frac{t^2}{\sigma^2}}dt = a_{0,0}^2 \Gamma\left(\frac{1}{2}\right)\sigma = 2\pi\sigma^2$$

$$a_{0,0}^2 \Gamma\left(\frac{1}{2}\right)\sigma = 2\pi\sigma^2$$

$$a_{0,0} = \pm\sqrt{\frac{2\pi\sigma}{\Gamma\left(\frac{1}{2}\right)}} = \pm\sqrt{2\sqrt{\pi}\sigma}$$

$$\mathcal{S}_{1,1} = \int_{-\infty}^{+\infty} I_1(t)\, I_1(t)dt = \int_{-\infty}^{+\infty} I_1^2(t)dt = 1$$

Pour $m = 1$, deux équations sont à écrire : $S_{1,1} = 1$ et $S_{0,1} = 0$

$$\int_{-\infty}^{+\infty} P_1^2(t)G^2(t)dt = \int_{-\infty}^{+\infty} \left(a_{1,1}t + a_{0,1}\right)^2 \frac{1}{2\pi\sigma^2} e^{-\frac{t^2}{\sigma^2}}dt = 1$$

$$\frac{1}{2\pi\sigma^2} \int_{-\infty}^{+\infty} \left(a_{1,1}^2 t^2 + 2a_{1,1}a_{0,1}t + a_{0,1}^2\right)e^{-\frac{t^2}{\sigma^2}}dt = 1$$

$$a_{1,1}^2 \int_{-\infty}^{+\infty} t^2 e^{-\frac{t^2}{\sigma^2}}dt + 2a_{1,1}a_{0,1}\int_{-\infty}^{+\infty} t e^{-\frac{t^2}{\sigma^2}}dt + a_{0,1}^2\int_{-\infty}^{+\infty} e^{-\frac{t^2}{\sigma^2}}dt = 2\pi\sigma^2$$

$$a_{1,1}^2 \Gamma\left(\frac{3}{2}\right)\sigma^3 + a_{0,1}^2 \Gamma\left(\frac{1}{2}\right)\sigma = 2\pi\sigma^2$$

$$a_{1,1}^2 \Gamma\left(\frac{3}{2}\right)\sigma^2 + a_{0,1}^2 \Gamma\left(\frac{1}{2}\right) = 2\pi\sigma$$

$$a_{1,1}^2 \Gamma\left(\frac{3}{2}\right)\sigma^2 + a_{0,1}^2 \Gamma\left(\frac{1}{2}\right) = 2\pi\sigma$$

$$\mathcal{S}_{0,1} = \int_{-\infty}^{+\infty} I_0(t)\, I_1(t)\, dt = 0$$

$$\int_{-\infty}^{+\infty} P_0(t) P_1(t) G^2(t)\, dt = \int_{-\infty}^{+\infty} a_{0,0}\big(a_{1,1}t + a_{0,1}\big) \frac{1}{2\pi\sigma^2}\, e^{-\frac{t^2}{\sigma^2}}\, dt = 0$$

$$a_{1,1} \int_{-\infty}^{+\infty} t\, e^{-\frac{t^2}{\sigma^2}}\, dt + a_{0,1} \int_{-\infty}^{+\infty} e^{-\frac{t^2}{\sigma^2}}\, dt = 0$$

$$a_{0,1} \Gamma\left(\frac{1}{2}\right)\sigma = 0$$

$\Rightarrow a_{0,1} = 0$

D'où, $a_{1,1} = \pm\sqrt{\dfrac{2\pi}{\Gamma\left(\frac{3}{2}\right)\sigma}} = \pm 2\sqrt{\dfrac{\sqrt{\pi}}{\sigma}}$

$$\mathcal{S}_{2,2} = \int_{-\infty}^{+\infty} I_2(t)\, I_2(t)\, dt = \int_{-\infty}^{+\infty} I_2^2(t)\, dt = 1$$

Pour m = 2, trois équations sont à écrire : $S_{2,2} = 1, S_{0,2} = 0$ et $S_{1,2} = 0$

$$\int_{-\infty}^{+\infty} P_2^2(t) G^2(t)\, dt = \int_{-\infty}^{+\infty} \big(a_{2,2}t^2 + a_{1,2}t + a_{0,2}\big)^2 \frac{1}{2\pi\sigma^2}\, e^{-\frac{t^2}{2\sigma^2}}\, dt = 1$$

$$\frac{1}{2\pi\sigma^2} \int_{-\infty}^{+\infty} \big(a_{2,2}^2 t^4 + a_{1,2}^2 t^2 + a_{0,2}^2 + 2a_{2,2}a_{1,2}t^3 + 2a_{2,2}a_{0,2}t^2 + 2a_{1,2}a_{0,2}t\big) e^{-\frac{t^2}{\sigma^2}}\, dt$$
$$= 1$$

$$\frac{1}{2\pi\sigma^2} \int_{-\infty}^{+\infty} \big(a_{2,2}^2 t^4 + 2a_{2,2}a_{1,2}t^3 + \big(a_{1,2}^2 + 2a_{2,2}a_{0,2}\big)t^2 + 2a_{1,2}a_{0,2}t + a_{0,2}^2\big) e^{-\frac{t^2}{\sigma^2}}\, dt$$
$$= 1$$

$$a_{2,2}^2 \int_{-\infty}^{+\infty} t^4 e^{-\frac{t^4}{4\sigma^4}}\, dt + \big(a_{1,2}^2 + 2a_{2,2}a_{0,2}\big) \int_{-\infty}^{+\infty} t^2 e^{-\frac{t^4}{4\sigma^4}}\, dt + a_{0,2}^2 \int_{-\infty}^{+\infty} e^{-\frac{t^2}{\sigma^2}}\, dt$$
$$= 2\pi\sigma^2$$

$$a_{2,2}^2\, \Gamma\left(\frac{5}{2}\right)\sigma^5 + \big(a_{1,2}^2 + 2a_{2,2}a_{0,2}\big)\Gamma\left(\frac{3}{2}\right)\sigma^3 + a_{0,2}^2 \Gamma\left(\frac{1}{2}\right)\sigma = 2\pi\sigma^2$$

$$a_{2,2}^2\, \Gamma\left(\frac{5}{2}\right)\sigma^4 + \big(a_{1,2}^2 + 2a_{2,2}a_{0,2}\big)\Gamma\left(\frac{3}{2}\right)\sigma^2 + a_{0,2}^2 \Gamma\left(\frac{1}{2}\right) = 2\pi\sigma$$

$$a_{2,2}^2\, \Gamma\left(\frac{5}{2}\right)\sigma^4 + \left(a_{1,2}^2 + 2a_{2,2}a_{0,2}\right)\Gamma\left(\frac{3}{2}\right)\sigma^2 + a_{0,2}^2\Gamma\left(\frac{1}{2}\right) = 2\pi\sigma$$

$$\mathcal{S}_{0,2} = \int_{-\infty}^{+\infty} I_0(t)\, I_2(t)\,dt = 0$$

$$\int_{-\infty}^{+\infty} P_0(t)P_2(t)G^2(t)dt = \int_{-\infty}^{+\infty} a_{0,0}\left(a_{2,2}t^2 + a_{1,2}t + a_{0,2}\right)\frac{1}{2\pi\sigma^2}e^{-\frac{t^2}{\sigma^2}}dt = 0$$

$$\int_{-\infty}^{+\infty} \left(a_{2,2}t^2 + a_{1,2}t + a_{0,2}\right)e^{-\frac{t^2}{\sigma^2}}dt = 0$$

$$a_{2,2}\int_{-\infty}^{+\infty} t^2 e^{-\frac{t^2}{\sigma^2}}dt + a_{0,2}\int_{-\infty}^{+\infty} e^{-\frac{t^2}{\sigma^2}}dt = 0$$

$$a_{2,2}\Gamma\left(\frac{3}{2}\right)\sigma^3 + a_{0,2}\Gamma\left(\frac{1}{2}\right)\sigma = 0$$

$$a_{2,2}\Gamma\left(\frac{3}{2}\right)\sigma^2 + a_{0,2}\Gamma\left(\frac{1}{2}\right) = 0$$

$$\mathcal{S}_{1,2} = \int_{-\infty}^{+\infty} I_1(t)\, I_2(t)\,dt = 0$$

$$\int_{-\infty}^{+\infty} P_1(t)P_2(t)G^2(t)dt = \int_{-\infty}^{+\infty} \left(a_{1,1}t + a_{0,1}\right)\left(a_{2,2}t^2 + a_{1,2}t + a_{0,2}\right)\frac{1}{2\pi\sigma^2}e^{-\frac{t^2}{\sigma^2}}dt$$
$$= 0$$

$$\frac{1}{2\pi\sigma^2}\int_{-\infty}^{+\infty} \left(a_{2,2}a_{1,1}t^3 + \left(a_{2,2}a_{0,1} + a_{1,2}a_{1,1}\right)t^2 + \left(a_{0,2}a_{1,1} + a_{1,2}a_{0,1}\right)t\right.$$
$$\left. + a_{0,2}a_{0,1}\right)e^{-\frac{t^2}{\sigma^2}}dt = 0$$

$$\left(a_{2,2}a_{0,1} + a_{1,2}a_{1,1}\right)\int_{-\infty}^{+\infty} t^2 e^{-\frac{t^2}{\sigma^2}}dt + a_{0,2}a_{0,1}\int_{-\infty}^{+\infty} e^{-\frac{t^2}{\sigma^2}}dt = 0$$

$$\left(a_{2,2}a_{0,1} + a_{1,2}a_{1,1}\right)\Gamma\left(\frac{3}{2}\right)\sigma^3 + a_{0,2}a_{0,1}\Gamma\left(\frac{1}{2}\right)\sigma = 0$$

$$\left(a_{2,2}a_{0,1} + a_{1,2}a_{1,1}\right)\Gamma\left(\frac{3}{2}\right)\sigma^2 + a_{0,2}a_{0,1}\Gamma\left(\frac{1}{2}\right) = 0$$

$$\pm a_{1,2}\sqrt{\frac{2\pi}{\Gamma\left(\frac{3}{2}\right)\sigma}}\,\Gamma\left(\frac{3}{2}\right)\sigma^2 = 0$$

$\Rightarrow a_{1,2} = 0$

Ainsi

$$a_{2,2} = \pm\sqrt{\frac{2\pi}{\left(\Gamma\left(\frac{5}{2}\right) - \frac{\Gamma^2\left(\frac{3}{2}\right)}{\Gamma\left(\frac{1}{2}\right)}\right)\sigma^3}} = \pm 2\sqrt{\frac{\sqrt{\pi}}{\sigma^3}}$$

Et :

$$a_{0,2} = \mp\sqrt{\frac{2\pi\Gamma^2\left(\frac{3}{2}\right)\sigma}{\Gamma\left(\frac{1}{2}\right)\left(\Gamma\left(\frac{1}{2}\right)\Gamma\left(\frac{5}{2}\right) - \Gamma^2\left(\frac{3}{2}\right)\right)}} = \mp\sqrt{\sqrt{\pi}\sigma}$$

Les coefficients des polynômes utilisés dans la génération d'impulsions unitaires ULB orthogonales peuvent ainsi être déterminés.

Pour $m > 2$, il y a $m+1$ équations à écrire. Une première équation exprime que le produit scalaire de la fonction $I_m$ par elle-même est égal à un : $S_{m,m} = 1$ et $m$ équations expriment l'orthogonalité de la fonction $I_m$ avec le jeu de fonctions $\{I_k\}_{0\leq k<m}$ : $S_{K,m} = 0$.

La **Fig. 6** illustre schématiquement un exemple de mise en oeuvre de l'invention dans lequel le module de positionnement met en oeuvre une fonction de communication en utilisant une modulation ULB permettant d'obtenir des impulsions ULB orthogonales aux impulsions ULB utilisées pour mettre en oeuvre la fonction de positionnement.

Lors d'une étape 651, le module de traitement obtient, pour mettre en oeuvre la fonction de communication, une modulation ULB permettant d'obtenir des impulsions composites ULB orthogonales aux impulsions composites ULB utilisées pour la mise en oeuvre de la fonction de positionnement.

Dans un mode de réalisation, la fonction de positionnement du module de positionnement 103 utilise, par exemple, une modulation générant des impulsions unitaires ULB $\alpha(t)$. Dans ce cas, le module de traitement 104 peut choisir une modulation générant des impulsions unitaires ULB $\beta(t)$ ou $\gamma(t)$ pour mettre en oeuvre la fonction de communication du module de positionnement 103.

Dans un mode de réalisation, chaque fonction du module de positionnement 103 utilise une impulsion composite résultant d'une concaténation d'au moins deux impulsions unitaires orthogonales deux à deux prises parmi les impulsions unitaires $\alpha(t)$, $\beta(t)$ et $\gamma(t)$. Dans ce mode de réalisation, au moins une impulsion unitaire d'une impulsion composite obtenue par la modulation utilisée pour la fonction de positionnement est orthogonale à chaque une impulsion unitaire d'une impulsion composite obtenue par la modulation utilisée pour la fonction de communication. Par exemple, la fonction de positionnement utilise une modulation permettant d'obtenir des impulsions composites résultant d'une concaténation des impulsions unitaires ULB $\alpha(t)$ et $\beta(t)$. Dans ce cas, la mise en oeuvre de la fonction de communication peut utiliser une modulation permettant d'obtenir des impulsions composites résultant d'une concaténation des impulsions unitaires ULB $\alpha(t)$ et $\gamma(t)$ ou $\gamma(t)$ et $\beta(t)$.

Dans une étape 652, les données à transmettre sont transmises par le module de positionnement 103 en utilisant la modulation ULB permettant d'obtenir les impulsions composites ULB orthogonales aux impulsions composites utilisées pour la mise en oeuvre de la fonction de positionnement.

Les modes de réalisation utilisant des antennes ayant des polarités orthogonales et des modulations permettant de générer des impulsions composites ULB orthogonales sont combinables. Dans ce cas, la fonction de communication peut utiliser une antenne ayant une première polarité pour transmettre des premières impulsions composites ULB, et la fonction de positionnement peut utiliser une antenne ayant une seconde polarité, orthogonale à la première polarité, pour transmettre des secondes impulsions composites ULB orthogonales aux premières impulsions composites ULB.

**Revendications**

1. Procédé de communication dans un réseau ad hoc (1), le réseau ad hoc comprenant un dispositif de communication mobile coordinateur (10), dit dispositif coordinateur, et une pluralité de dispositifs de communication mobiles subordonnés (11, 12, 13, 14, 15), dits dispositifs subordonnées, chaque dispositif de communication (10, 11, 12, 13, 14, 15) comprenant un module de communication sans fil (101) et un module de positionnement (103) utilisant une transmission de premières impulsions modulées suivant une première modulation ultra large bande pour déterminer des informations représentatives d'une position dudit dispositif de communication (11, 12, 13, 14, 15), **caractérisé en ce que** le procédé comprend les étapes suivantes, lorsqu'il est mis en oeuvre par un dispositif de communication (10, 11, 12, 13, 14, 15) :

   obtenir (61) des données à transmettre ;
   vérifier (62) une capacité de transmission du module de communication sans fil (101) ;
   lorsque le module de communication sans fil (101) ne permet pas de transmettre les données, utiliser (65) le module de positionnement (103) pour transmettre lesdites données sous forme de secondes impulsions orthogonales aux premières impulsions.

2. Procédé selon la revendication 1, **caractérisé en ce que** le module de positionnement (103) utilise une première antenne ayant une première polarité pour transmettre les premières impulsions et une seconde antenne ayant une polarité orthogonale à la première polarité pour transmettre les secondes impulsions.

3. Procédé selon la revendication 1 ou 2, **caractérisé en ce que** l'étape d'utilisation du module de positionnement (103) pour transmettre lesdites données sous forme de secondes impulsions orthogonales aux premières impulsions comprend une étape d'obtention (651) d'une seconde modulation ultra large bande permettant d'obtenir des secondes impulsions orthogonales aux premières impulsions, lesdites données étant transmises (652) en utilisant la seconde modulation.

4. Procédé selon la revendication 3, **caractérisé en ce que** les première et seconde modulations sont des modulations en position d'impulsion permettant d'obtenir des impulsions, dites impulsions composites, comprenant au moins une impulsion unitaire, chaque impulsion unitaire étant représentée par la formule suivante :

$$I_n(t) = P_n(t)G(t)$$

   où $n$ est un indice prenant une valeur entière différente pour la première ou la seconde modulation,

   $P_n(t)$ est un polynôme de degré $n$ tel que $P_n(t) = \sum_{k=0}^{k=n} a_{k,n} t^k$, où $a_{k,n}$ est un coefficient du polynôme de degré $n$, $k$ un nombre entier, et $t$ est une variable représentative du temps,

   $G(t)$ est une fonction gaussienne telle que $G(t) = \frac{1}{\sqrt{2\pi}\sigma} e^{-\frac{t^2}{2\sigma^2}}$ ;

   les impulsions unitaires comprises dans une impulsion composite étant orthogonales deux à deux et au moins une impulsion unitaire d'une impulsion composite obtenue par la première modulation étant orthogonale à chaque impulsion unitaire d'une impulsion composite obtenue par la seconde modulation.

5. Procédé selon la revendication 4, **caractérisé en ce que** les coefficients $a_{k,n}$ des polynômes sont obtenus itérativement en déterminant en premier le coefficient du polynôme du plus petit degré, puis en déterminant successivement les coefficients des polynômes de degré supérieur.

6. Dispositif de communication mobile (10, 11, 12, 13, 14, 15) compris dans un réseau ad hoc (1), ledit dispositif de communication mobile (10, 11, 12, 13, 14, 15) comprenant un module de communication sans fil (101) pour communiquer des données avec d'autres dispositifs de communication mobile du réseau ad hoc (1) et un module de positionnement (103) utilisant une transmission de premières impulsions modulées suivant une première modulation ultra large bande pour déterminer des informations représentatives d'une position dudit dispositif de communication (10, 11, 12, 13, 14, 15), **caractérisé en ce que** ledit dispositif comprend :

des moyens d'obtention pour obtenir (61) des données à transmettre ;

des moyens de vérification pour vérifier (62) une capacité de transmission du module de communication sans fil (101) ;

des moyens de transmission pour transmettre lesdites données sous forme de secondes impulsions orthogonales aux premières impulsions utilisant le module de positionnement (103).

**7.** Système de communication comprenant une pluralité de dispositifs de communication mobile (10, 11, 12, 13, 14, 15) selon la revendication 6.

**8.** Programme d'ordinateur, **caractérisé en ce qu'**il comprend des instructions pour mettre en oeuvre, par un dispositif (10, 11, 12, 13, 14, 15), le procédé selon l'une quelconque des revendications 1 à 5, lorsque ledit programme est exécuté par un processeur (1041) dudit dispositif (10, 11, 12, 13, 14, 15).

**9.** Moyens de stockage, **caractérisés en ce qu'**ils stockent un programme d'ordinateur comprenant des instructions pour mettre en oeuvre, par un dispositif (10, 11, 12, 13, 14, 15), le procédé selon l'une quelconque des revendications 1 à 5, lorsque ledit programme est exécuté par un processeur (1041) dudit dispositif (10, 11, 12, 13, 14, 15).

## Patentansprüche

**1.** Verfahren zur Kommunikation in einem Ad-hoc-Netzwerk (1), wobei das Ad-hoc-Netzwerk eine koordinierende Mobilkommunikationsvorrichtung (10), koordinierende Vorrichtung genannt, und eine Vielzahl von untergeordneten Mobilkommunikationsvorrichtungen (11, 12, 13, 14, 15), untergeordnete Vorrichtungen genannt, umfasst, wobei jede Kommunikationsvorrichtung (10, 11, 12, 13, 14, 15) ein Drahtloskommunikationsmodul (101) und ein Standortbestimmungsmodul (103) umfasst, das eine Übertragung von ersten Impulsen verwendet, die gemäß einer ersten Ultrabreitbandmodulation moduliert werden, um Informationen zu bestimmen, die für einen Standort der Kommunikationsvorrichtung (11, 12, 13, 14, 15) repräsentativ ist, **dadurch gekennzeichnet, dass** das Verfahren die folgenden Schritte umfasst, wenn es von einer Kommunikationsvorrichtung (10, 11, 12, 13, 14, 15) durchgeführt wird:

Erhalten (61) der zu übertragenden Daten;
Überprüfen (62) einer Übertragungskapazität des Drahtloskommunikationsmoduls (101);
wenn das Drahtloskommunikationsmodul (101) es nicht ermöglicht, die Daten zu übertragen, Verwenden (65) des Standortbestimmungsmoduls (103), um die Daten in Form von zweiten Impulsen zu übertragen, die orthogonal zu den ersten Impulsen sind.

**2.** Verfahren nach Anspruch 1, **dadurch gekennzeichnet, dass** das Standortbestimmungsmodul (103) eine erste Antenne mit einer ersten Polarität verwendet, um die ersten Impulse zu übertragen, und eine zweite Antenne mit einer Polarität, die orthogonal zur ersten Polarität ist, um die zweiten Impulse zu übertragen.

**3.** Verfahren nach Anspruch 1 oder 2, **dadurch gekennzeichnet, dass** der Schritt des Verwendens des Standortbestimmungsmoduls (103) zum Übertragen der Daten in Form von zweiten Impulsen, die orthogonal zu den ersten Impulsen sind, einen Schritt des Erhaltens (651) einer zweiten Ultrabreitbandmodulation umfasst, die es ermöglicht, zweite Impulse zu erhalten, die orthogonal zu den ersten Impulsen sind, wobei die Daten unter Verwendung der zweiten Modulation übertragen (652) werden.

**4.** Verfahren nach Anspruch 3, **dadurch gekennzeichnet, dass** die erste und die zweite Modulation Pulspositionsmodulationen sind, die es ermöglichen, Impulse, zusammengesetzte Impulse genannt, zu erhalten, die mindestens einen Einzelimpuls umfassen, wobei jeder Einzelimpuls durch die folgende Formel dargestellt wird:

$$I_n(t) = P_n(t)G(t)$$

worin $n$ ein Index ist, der für die erste oder die zweite Modulation einen unterschiedlichen ganzzahligen Wert annimmt,

$P_n(t)$ ein Polynom mit dem Grad $n$ ist, so dass $P_n(t) = \sum_{k=0}^{k=n} a_{k,n} t^k$, worin $a_{k,n}$ ein Koeffizient des Polynoms mit dem Grad $n$ ist, $k$ eine ganze Zahl ist und $t$ eine für die Zeit repräsentative Variable ist,

$G(t)$ eine Gaußsche Funktion ist, so dass $G(t) = \frac{1}{\sqrt{2\pi}\sigma} e^{-\frac{t^2}{2\sigma^2}};$

wobei die in einem zusammengesetzten Impuls enthaltenen Einzelimpulse paarweise orthogonal sind und mindestens ein Einzelimpuls eines zusammengesetzten Impulses, der durch die erste Modulation erhalten wird, orthogonal zu jedem Einzelimpuls eines zusammengesetzten Impulses ist, der durch die zweite Modulation erhalten wird.

**5.** Verfahren nach Anspruch 4, **dadurch gekennzeichnet, dass** die Koeffizienten $a_{k,n}$ der Polynome iterativ erhalten werden, indem zunächst der Koeffizient des Polynoms mit dem kleinsten Grad bestimmt wird und dann nacheinander die Koeffizienten der Polynome mit den höheren Graden bestimmt werden.

**6.** Mobilkommunikationsvorrichtung (10, 11, 12, 13, 14, 15) in einem Ad-hoc-Netzwerk (1), wobei die Mobilkommunikationsvorrichtung (10, 11, 12, 13, 14, 15) ein Drahtloskommunikationsmodul (101) umfasst, um Daten mit anderen Mobilkommunikationsvorrichtungen des Ad-hoc-Netzwerks (1) zu kommunizieren, und ein Standortbestimmungsmodul (103), das eine Übertragung von ersten Impulsen verwendet, die gemäß einer ersten Ultrabreitbandmodulation moduliert werden, um Informationen zu bestimmen, die für einen Standort der Kommunikationsvorrichtung (10, 11, 12, 13, 14, 15) repräsentativ sind, **dadurch gekennzeichnet, dass** die Vorrichtung umfasst:

Mittel zum Erhalten, um zu übertragende Daten zu erhalten (61);
Mittel zum Überprüfen, um eine Übertragungskapazität des Drahtloskommunikationsmoduls (101) zu überprüfen (62);
Übertragungsmittel, um die Daten in Form von zweiten Impulsen, die orthogonal zu den ersten Impulsen sind, unter Verwendung des Standortbestimmungsmoduls (103) zu übertragen.

**7.** Kommunikationssystem, umfassend eine Vielzahl von Mobilkommunikationsvorrichtungen (10, 11, 12, 13, 14, 15) nach Anspruch 6.

**8.** Computerprogramm, **dadurch gekennzeichnet, dass** es Anweisungen zum Durchführen des Verfahrens nach einem der Ansprüche 1 bis 5 durch eine Vorrichtung (10, 11, 12, 13, 14, 15), wenn das Programm von einem Prozessor (1041) der Vorrichtung (10, 11, 12, 13, 14, 15) abgearbeitet wird, umfasst.

**9.** Speichermittel, **dadurch gekennzeichnet, dass** sie ein Computerprogramm speichern, das Anweisungen zum Durchführen des Verfahrens nach einem der Ansprüche 1 bis 5 durch eine Vorrichtung (10, 11, 12, 13, 14, 15), wenn das Programm von einem Prozessor (1041) der Vorrichtung (10, 11, 12, 13, 14, 15) abgearbeitet wird, umfasst.

**Claims**

**1.** Method of communication in an ad hoc network (1), the ad hoc network comprising a coordinator mobile communication device (10), termed the coordinator device, and a plurality of subordinate mobile communication devices (11, 12, 13, 14, 15), termed subordinate devices, each communication device (10, 11, 12, 13, 14, 15) comprising a wireless communication module (101) and a positioning module (103) using a transmission of first pulses modulated according to a first ultra-wideband modulation to determine information representative of a position of the said communication device (11, 12, 13, 14, 15), **characterized in that** the method comprises the following steps, when it is implemented by a communication device (10, 11, 12, 13, 14, 15):

obtain (61) data to be transmitted;
verify (62) a transmission capacity of the wireless communication module (101);
when the wireless communication module (101) does not enable the data to be transmitted, use (65) the positioning module (103) to transmit the said data in the form of second pulses orthogonal to the first pulses.

**2.** Method according to Claim 1, **characterized in that** the positioning module (103) uses a first antenna having a first polarity to transmit the first pulses and a second antenna having a polarity orthogonal to the first polarity to transmit the second pulses.

**3.** Method according to Claim 1 or 2, **characterized in that** the step of using the positioning module (103) to transmit the said data in the form of second pulses orthogonal to the first pulses comprises a step (651) of obtaining a second ultra-wideband modulation making it possible to obtain second pulses orthogonal to the first pulses, the said data being transmitted (652) using the second modulation.

4.  Method according to Claim 3, **characterized in that** the first and second modulations are pulse position modulations making it possible to obtain pulses, termed composite pulses, comprising at least one unitary pulse, each unitary pulse being represented by the following formula:

$$I_n(t) = P_n(t)G(t)$$

where n is an index taking a different integer value for the first or the second modulation,

$P_n(t)$ is a polynomial of degree $n$ such that $P_n(t) = \sum_{k=0}^{k=n} a_{k,n} t^k$ , where $a_{k,n}$ is a coefficient of the polynomial of degree $n$, $k$ an integer number, and $t$ is a variable representative of the time,

$G(t)$ is a Gaussian function such that $G(t) = \frac{1}{\sqrt{2\pi}\sigma} e^{-\frac{t^2}{2\sigma^2}}$

the unitary pulses included in a composite pulse being pairwise orthogonal and at least one unitary pulse of a composite pulse obtained by the first modulation being orthogonal to each unitary pulse of a composite pulse obtained by the second modulation.

5.  Method according to Claim 4, **characterized in that** the coefficients $a_{k,n}$ of the polynomials are obtained iteratively by determining firstly the coefficient of the polynomial of the smallest degree, and then by successively determining the coefficients of the polynomials of higher degree.

6.  Mobile communication device (10, 11, 12, 13, 14, 15) included in an ad hoc network (1), the said mobile communication device (10, 11, 12, 13, 14, 15) comprising a wireless communication module (101) for communicating data with other mobile communication devices of the ad hoc network (1) and a positioning module (103) using a transmission of first pulses modulated according to a first ultra-wideband modulation to determine information representative of a position of the said communication device (10, 11, 12, 13, 14, 15), **characterized in that** the said device comprises:

    obtaining means to obtain (61) data to be transmitted;
    verification means to verify (62) a transmission capacity of the wireless communication module (101);
    transmission means to transmit the said data in the form of second pulses orthogonal to the first pulses using the positioning module (103).

7.  Communication system comprising a plurality of mobile communication devices (10, 11, 12, 13, 14, 15) according to Claim 6.

8.  Computer program, **characterized in that** it comprises instructions for implementing, by a device (10, 11, 12, 13, 14, 15), the method according to any one of Claims 1 to 5, when the said program is executed by a processor (1041) of the said device (10, 11, 12, 13, 14, 15).

9.  Storage means, **characterized in that** they store a computer program comprising instructions for implementing, by a device (10, 11, 12, 13, 14, 15), the method according to any one of Claims 1 to 5, when the said program is executed by a processor (1041) of the said device (10, 11, 12, 13, 14, 15).

Subordonné 4

Subordonné 3

11

12

Subordonné 5

Coordinateur

Subordonné 2

15

10

13

Subordonné 1

1

14

**Fig. 1**

101

102

103

Com. sans fil

Localisation externe

Positionnement

105

10

104

Traitement

**Fig. 2**

1041
CPU

1042
RAM

1043
ROM

104

1040

HDD
1044

COM
1045

Fig. 3

Synchronisation des horloges 401

Phase préparatoire 402

Chaque module subordonné
envoi sa signature ULB 403

Chaque module subordonné
mesure distances 404

Chaque module subordonné
envoi distances mesurées au
module coordinateur 405

Module coordinateur calcule positions 406

Fig. 4

Obtention de données — 61

Vérification état module de communication sans fil — 62

Communication par module de communication sans fils possible ? — 63

oui

non

Utilisation du module de communication sans fils pour transmission — 64

Utilisation du module de positionnement pour transmission — 65

Fig. 5

Détermination seconde modulation — 651

Transmission données utilisant la seconde modulation — 652

Fig. 6

Fig. 7A

Fig. 7B

Fig. 7C